# EUROPEAN PATENT APPLICATION

(11) **EP 1 630 794 A2**
(43) Date of publication of application: **01.03.2006**
(21) Application number: 05253832.9
(22) Date of filing: 21.06.2005
(51) Int. Cl.: G11B 7/00

(54) **Optical pickup unit and optical disc drive having the same**

(30) Priority: 27.08.2004 JP 2004248157
(71) Applicant: Mitsumi Electric Co., Ltd., Tama-Shi, Tokyo (JP)
(72) Inventor: Yamada, Tsukasa, c/o Mitsumi Electric Co. Ltd., Tama-shi, Tokyo (JP); Takahashi, Soumei, c/o Mitsumi Electric Co. Ltd., Tama-shi, Tokyo (JP)
(74) Representative: Haley, Stephen

(57) **Abstract**

An optical pickup unit comprises an objective lens driving device including an objective lens holder, a damper base, and a yoke for forming a magnetic circuit together with coils. The optical pickup unit further comprises an optical base in which the objective lens driving device is assembled and a mirror for entering a laser beam into an optical disc through the objective lens. The yoke comprises a bottom portion and a first rising portion extending upward from an end of the bottom portion near the damper base, and has a first opening extending from the proximal end of the first rising portion to the end opposite from the first rising portion. The optical base comprises a projection extending from the proximal side of the first rising portion within the first opening and a mirror mounting portion provided at the distal end of the projection.

## Description

This application claims priority to prior Japanese patent application JP 2004-248157, the disclosure of which is incorporated herein by reference.

The present invention relates to an optical disc drive and an optical pickup unit for the optical disc drive.

As well know in the art, an optical disc drive is a device for reading/writing information from/into an optical disc (CD, CD-ROM, CD-R/RW, DVD-ROM, DVD±R/RW, Blu-lay, HD DVD, or the like). In order to achieve reading/writing the information from/into the optical disc, the optical disc drive of this type comprises an optical pickup unit for irradiating a laser beam onto the optical disc and for detecting its reflected beam.

In the manner which is well known in the art, in DVD apparatuses, there is one in which a particular optical pickup unit is mounted in order to enable to record/reproduce data in/from both of the DVD and the CD. The particular optical pickup unit of the type is for carrying out recording or reproducing by selectively using two kinds of laser beams, namely, a laser beam having short wavelength (wavelength band of 650 nm) for the DVD and a laser beam having a long wavelength (wavelength band of 780 nm) for the CD. The particular optical pickup unit is called a two-wavelength handling optical pickup unit.

One of the two-wavelength handling optical pickup units of the type described comprises a first laser diode (LD) for emitting the laser beam (a first laser beam) having the short wavelength for the DVD and a second laser diode (LD) for emitting the laser beam (a second laser beam) having the long wavelength for the CD. Such a two-wavelength handling optical pickup unit is disclosed in Japanese Unexamined Patent Application Publication No. 2003-272220 or JP-A 2003-272220.

However, if the first laser diode and the second laser diode are formed as separate parts, it is inconvenient that the two-wavelength handling optical pickup unit comprises a lot of parts and is large-scale. In order to cope with such problems, a new laser diode comprising, as one part (one chip), the first laser diode and the second laser diode is developed and proposed, for example, in Japanese Unexamined Patent Application Publication No. 11-149652 or JP-A 11-149652. Such a new laser diode is called a one-chip type laser diode. It is possible to miniaturize the two-wavelength handling optical pickup unit by using the one-chip type laser diode.

However, inasmuch as the one-chip type laser diode has a first emission point for emitting the first laser beam and a second emission point for the second laser beam that are apart from each other by a predetermined distance of, for example, 100µm, the first laser beam and the second laser beam are emitted in parallel with they apart from each other by the predetermined distance. Accordingly, various problems can arise when one of two laser beams apart from each other is irradiated on the optical disc. It is therefore preferable to guide the first laser beam and the second laser beam to the same optical axis by using any optical axis coinciding means.

A two-wavelength laser module solving such a problem is proposed, for example, in Japanese Unexamined Patent Application Publication No. 2001-284740 or JP-A 2001-284740. The proposed two-wavelength laser module comprises a first laser source for emitting a first laser beam having a first wavelength, a second laser source for emitting a second laser beam having a second wavelength different from the first wavelength, and optical axis coinciding means for receiving one of the first laser beam and the second laser beam to emit a laser beam on the same optical axis. In the two-wavelength laser module, the first laser source, the second laser source, and the optical axis coinciding means are mounted in a package.

In addition, in the above-mentioned one-chip type laser diode, when the two laser beams apart from each other are irradiated on the optical disc, return beams reflected thereon (disc's reflected beams) are also reflected (returned) with optical axes of them deviated from each other. Accordingly, in this state as it is, it is impossible to receive the disc's reflected beams at one reception position in a photodetector.

An optical pickup unit solving this problem is also proposed, for example, in Japanese Unexamined Patent Application Publication No. 2002-288870 or JP-A 2002-288870. The proposed optical pickup unit comprises a two-wavelength package laser diode, an optical system, and an optical axis combining element. The two-wavelength package laser diode emits first and second laser beams, which have first and second wavelengths different from each other, in parallel from first and second emission points apart from each other by a predetermined distance, respectively. The optical system is for guiding the first and the second laser beams to an optical disc and is for transmitting first and second return beams having deviated optical axes incident from the optical disc. The optical axis combining element guides the first and the second return beams transmitted through the optical system to the photodetector so that the deviated optical axes are coincided at one reception position of the photodetector.

At any rate, the optical disc drive of the type described develops a tendency to a thin type (a slim type or a ultra-slim type) so as to have a low height size. As a result, it is necessary to thin an optical pickup actuator which is a main portion of the optical pickup unit.

In general, an optical pickup unit comprises a laser beam source for emitting a laser beam and an optical system for guiding the emitted laser beam to an optical disc and for guiding its reflected beam to a photodetector. The optical system includes an objective lens disposed so as to face the optical disc.

It is necessary for the objective lens used in the optical pickup unit to accurately control in position with respect to a focus direction along an optical axis and a track direction along a radial direction of the optical disc to thereby accurately focus the laser beam on a track of a recording surface of the rotating optical disc. These controls are called a focusing control and a tracking control, respectively. Further, following improvement in recording density, there have recently been increasing demands for removing or suppressing the influence caused by warping of the optical disc. In view of this, it is also necessary that the objective lens be subjected to a so-called tilting control.

The above-mentioned optical pickup actuator is a device for enabling the focusing control, the tracking control, and the tilting control. The optical pickup actuator is called an objective lens driving device. In the objective lens driving device, an objective lens holder holding the objective lens is elastically supported by a suspension member with respect to a damper base. The suspension member consists of a plurality of suspension wires disposed both sides of the damper base and the objective lens holder.

Now, the objective lens driving devices are classified into a so-called symmetry type and a so-called asymmetry type. The objective lens driving devices of the symmetry type are ones wherein coils and a magnetic circuit including magnets are symmetrically disposed with respect to the objective lens as a center. The objective lens driving devices of the asymmetry type are ones wherein the coils and the magnetic circuit including magnets are asymmetrically disposed with respect to the objective lens.

One of the objective lens driving devices of the symmetry type is disclosed, for example, in Japanese Unexamined Patent Application Publication No. 2001-93177 or JP-A 2001-93177. According to the JP-A 2001-93177, the objective lens driving device of the symmetry type comprises an objective lens holder for holding an objective lens, a focusing coil wound around the objective lens holder, tracking coils affixed to the objective lens holder at outer sides in a tangential direction of an optical disc, and tilting coils affixed to the objective lens holder at both sides in a radial direction of the optical disc. These coils are partly located in gaps of the magnetic circuit. With this structure, the objective lens driving device of the symmetry type is capable of finely controlling a position and an inclination of the objective lens by controlling currents flowing through the respective coils.

In the objective lens driving device of the symmetry type, the suspension member (the plurality of suspension wires) is provided so as to maintain horizontality in an inactive state. Specifically, the objective lens driving device is divided into a movable portion including the objective lens holder for holding the objective lens and a fixed portion including the damper base. The movable portion is elastically supported by the suspension member (the plurality of suspension wires) with respect to the damper base. The suspension member (the plurality of suspension wires) is disposed so as to extend in parallel with a horizontal plane between the damper base and the objective lens holder.

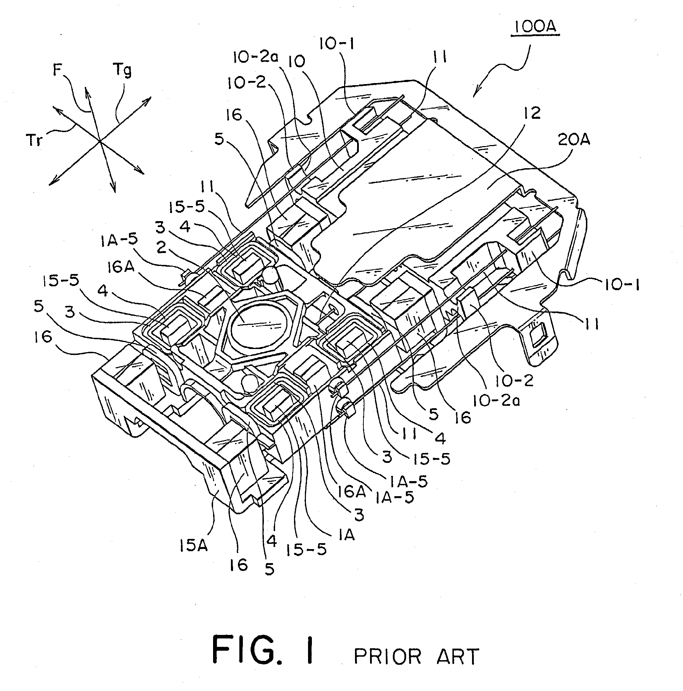

Referring to Fig. 1, a conventional objective lens driving device 100A will be described at first in order to facilitate an understanding of the present invention. Fig. 1 is a perspective view of the conventional objective lens driving device 100A.

The objective lens driving device 100A comprises an objective lens holder 1A having a substantially rectangular parallelepiped shape. The objective lens holder 1A comprises a lens fitting portion for fitting an objective lens 2 at a center thereof. The lens fitting portion has a through hole. The objective lens holder 1A has, at the four corners, four main openings for receiving four tilting coils 4 and four focusing coils 3. The four openings are also for exposing yoke pieces 15-4 of a yoke 15A. In addition, the objective lens holder 1A has two auxiliary openings for receiving two auxiliary magnets 16A at both sides in a tracking direction Tr.

The objective lens holder 1A has four outer walls. At two outer walls in parallel in the tracking direction Tr or a width direction of the objective lens holder 1A, four tracking coils 5 are attached in positions corresponding to the above-mentioned main openings.

The objective lens holder 1A is elastically supported by a damper base 10 through a suspension member consisting of four suspension wires 11 extending in a tangential direction Tg. In other words, the four suspension wires 11 are disposed so as to maintain horizontality along a horizontal plane defined by the tangential direction Tg and the tracking direction Tr. The damper base 10 has two supporting portions 10-1 at two side walls in parallel in the tangential direction Tg. Each of the two supporting portions 10-1 is for supporting ends of the corresponding two suspension wires 11. An end of each suspension wire 11 penetrates the corresponding supporting portion 10-1 and is adhesively fixed in a penetrated state. At inner sides of the supporting portions 10-1, ends of two lead wires 12 are attached to the damper base 10. The damper base 10 has two damper portions 10-2 apart from the supporting portions 10-1 in the tangential direction Tg toward the objective lens holder 1A. Each of the two damper portions 10-2 has two U-shaped ditches 10-2a at both ends in a focusing direction F, namely, up and down (a vertical direction). In the ditches 10-2a, damping material (not shown) such as silicone gel is filled.

On the other hand, at two side walls in parallel in the tangential direction Tg, the objective lens holder 1A has two supporting portions 1A-5 each of which is for supporting other ends of the two suspension wires 11. The other ends of each suspension wire 11 penetrate the corresponding supporting portion 1A-5 and are adhesively fixed to the corresponding supporting portion 1A-5 in a penetrated state.

At any rate, in the example being illustrated, the four suspension wires 11 of the suspension member are disposed on both sides of the damper base 10 and the objective lens holder 1A. The suspension member elastically supports the objective lens holder 1A with respect to the damper base 10.

In the manner which is well known in the art, the four suspension wires 11 and the two lead wires 12 are also used as wires for electrically connecting the above-mentioned various coils with an external circuit, namely, a driving circuit for driving the objective lens driving device 100A.

At a lower side of the objective lens holder 1A, an assembled member consisting of a yoke 15A, four main magnets 16, and the two auxiliary magnets 16A are disposed. The assembled member forms a magnetic circuit among the above-mentioned various coils. The magnetic circuit applies driving forces to the four tilting coils 4, the four focusing coils 3, and the four tracking coils 5 according to energizing to the four tilting coils 4, the four focusing coils 3, and the four tracking coils 5. The main magnets 16 are mounted on the yoke 15A at both end portions in the tangential direction Tg so as to face the four tracking coils 5. The two auxiliary magnets 16A are mounted on the yoke 15A at the both sides of the lens fitting portion in the tracking direction Tr in the manner which is described above and between the four yoke pieces 15-5.

In the conventional objective lens driving device 100A, the four suspension wires 11 are disposed or assembled so as to maintain the horizontality in an inactive state. The "inactive state" is a state where any current does not flow through the above-mentioned coils 3, 4, and 5 and the movable portion (an objective lens holder assembly) including the objective lens holder 1A balances with its own weight. In other words, the four suspension wires 11 extend in the tangential direction Tg in the inactive state. In addition, Fig. 1 shows part of a metallic cover represented by reference numeral 20A.

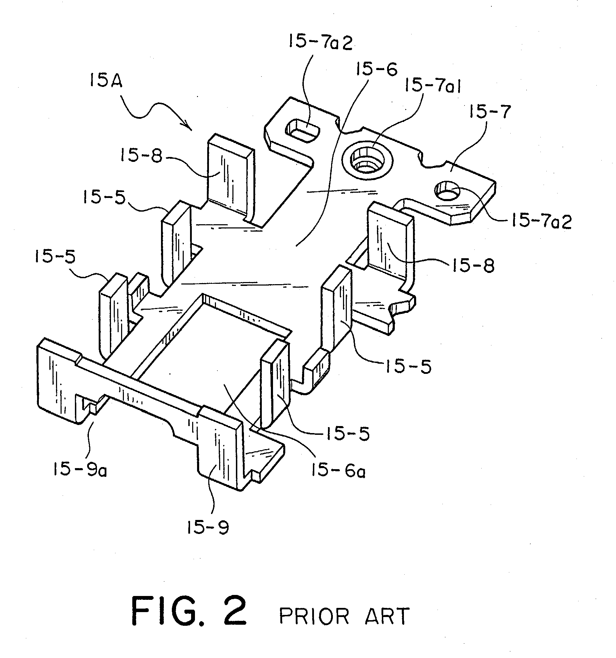

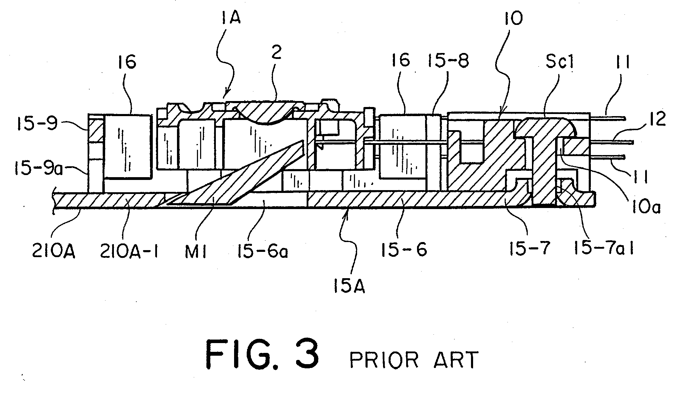

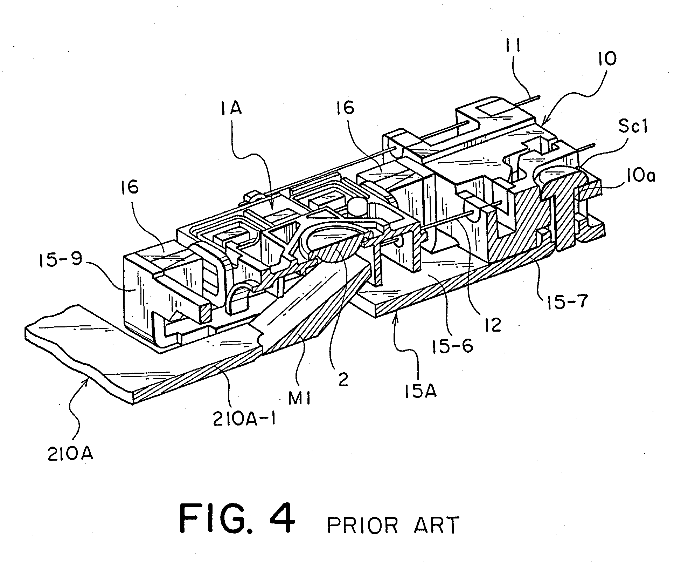

Referring to Figs. 2 to 4, the relation between the damper base 10 and the yoke 15A will be described. Fig. 2 is a perspective view of the yoke 15A. Fig. 3 is a cross-sectional view taken by a plane along a longitudinal centerline of the objective lens driving device 100A shown in Fig. 1, and Fig. 4 is a perspective view of the objective lens driving device 100A in Fig. 3 seen obliquely from above.

In Fig. 2, the yoke 15A includes a bottom portion 15-6, and two each, four in total, yoke pieces 15-5 formed on both sides of the bottom portion 15-6 in the tangential direction. The yoke 15A also includes a holding portion 15-7 formed at one end of the bottom portion 15-6 in the tangential direction for holding the damper base 10 (Fig. 1), and two first rising portions 15-8 formed near the holding portion 15-7 of the bottom portion 15-6. The yoke 15A further includes a second rising portion 15-9 formed at the other end of the bottom portion 15-6 in the tangential direction. The yoke piece 15-5, the first rising portions 15-8, and the second rising portion 15-9 are formed by forming slits on the bottom portion 15-6 and bending the same upward. In particular, an opening 15-6a is formed on the bottom portion 15-6, and the bottom portion 15-6 is bent at the midpoint of the opening 15-6a so that an opening 15-9a is formed at an upwardly extended portion of the second rising portion 15-9. The opening 15-9a is used for allowing passage of a laser beam, described later.

In Figs. 3 and 4, the damper base 10 is integrated with the yoke 15A by screwing a screw Sc1 into a screw hole 15-7a1 formed on the holding portion 15-7 from above through a through hole 10a formed thereon. The objective lens driving device 100A is assembled to an optical base 210A, shown only partly. Assembly is achieved by bonding part of the yoke 15A, for example, a portion between the two yoke pieces 15-5 on both sides to the optical base.

On the other hand, a total reflection mirror (a rising mirror) M1 is installed at a lower side of the objective lens 2. In the case of data recording operation with respect to the optical disc (not shown), the total reflection mirror M1 reflects a laser beam incoming through the opening 15-9a and irradiates onto the optical disc through the objective lens 2. In the case of the data reproducing operation, the total reflection mirror M1 returns the laser beam irradiated onto the optical disc and then reflected from the optical disc back to the optical system (not shown) through the opening 15-9a.

The total reflection mirror M1 is fixed to the distal end of a projection 210A-1 formed on the optical base 210A by the use of bonding material or the like. The total reflection mirror M1 needs to be provided on the optical base 210A side in terms of the manufacturing process of the optical pickup unit. Therefore, the projection 210A-1 which projects into the opening 15-6a through the opening 15-9a is provided and the edge of the lower side of the total reflection mirror M1 is bonded to the distal end of the projection 210A-1. In this arrangement, the bottom surface of the objective lens driving device 100A, that is, the bottom surface of the yoke 15A is arranged to be flush with the bottom surface of the optical base 210A, so that reduction of the thickness of an optical pickup actuator is achieved.

However, in the mounting structure of the total reflection mirror M1 as described above, adhesion can only be done at the lower edge of the total reflection mirror M1, and hence a large area of adhesion cannot be secured between the total reflection mirror M1 and the projection 210A-1. Therefore, mounting of the total reflection mirror M1 is obliged to become unstable.

As a method of solving such unstable property, the following solution is conceivable. Part of the optical base 210A is extended from a position opposite from the projection 210A-1 to a position below the objective lens 2 along the holding portion 15-7 of the yoke 15A and the bottom surface of the bottom portion 15-6, the back side of the total reflection mirror M1 is bonded to the distal end of the extended portion. However, in this arrangement, the bottom surface of the yoke 15A cannot be aligned in flush with the bottom surface of the optical base 210A, and the thickness of the optical pickup actuator becomes larger by a thickness corresponding to the thickness of the holding portion 15-7 or the bottom portion 15-6 of the yoke 15A.

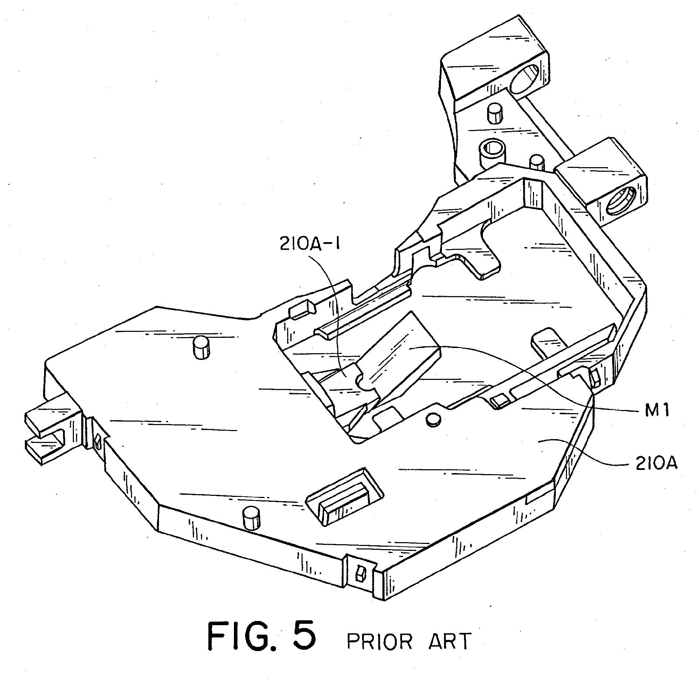

Fig. 5 shows an outline of the optical base 210A, and the total reflection mirror M1 is mounted to the projection 210A-1. The optical base 210A has a hollow portion for receiving the objective lens driving device 100A. In the state shown in the drawing, the principal portion of the objective lens driving device 100A is fitted to the hollow portion and part of the yoke 15A is bonded to the edges on the both side of the hollow portion.

As described above, the optical pickup unit itself tends to be reduced in thickness (slim type or ultra-slim type). In addition, multiple wavelength may be handled by a single optical pickup unit as in the case of the two-wavelength handling optical pickup unit. In this case as well, the objective lens driving device must be accommodated within the height limit. In order to comply with such conditions, the objective lens driving device having a symmetrical structure in the related art is disadvantageously obliged to employ a structure in which the total reflection mirror M1 is unstable and less reliable.

Accordingly, it is an object of the present invention to provide an optical pickup unit in which mounting reliability of a total reflection mirror is improved while restraining the height thereof within a required height limit. An optical pickup unit of the present invention comprises an objective lens driving device including an objective lens holder for holding an objective lens, a damper base for elastically supporting the objective lens holder with a plurality of suspension wires, and a yoke including a plurality of permanent magnet holding portions and a yoke piece to be inserted into the objective lens holder in order to form a magnetic circuit with respect to a plurality of coils mounted to the objective lens holder. The optical pickup unit further comprises an optical base in which the objective lens driving device is assembled and a mirror for reflecting a laser beam from a light-emitting source and cause the laser beam to enter into the optical disc through the objective lens. According to an aspect of the present invention, the yoke comprises a bottom portion and a first rising portion extending upward from an end of the bottom portion near the damper base, and has a first opening extending from the proximal end of the first rising portion through the bottom portion to the end opposite from the first rising portion. The optical base comprises a projection extending from the proximal side of the first rising portion within the first opening and a mirror mounting portion provided at the distal end of the projection.

In the above-mentioned optical pickup unit, the optical base may comprise a pedestal portion in a region corresponding to the lower surface of the damper base, and it is preferable that the projection extends from the pedestal portion.

In the above-mentioned optical pickup unit, it is preferable that the mirror mounting portion has an inclined surface, and that the mirror is mounted at the back side bonded to the inclined surface.

In the above-mentioned optical pickup unit, it is preferable that the objective lens driving device is assembled to the optical base with the lower surface of the yoke and the lower surface of the projection being aligned in flush with each other.

In the above-mentioned optical pickup unit, the yoke may further comprise a second rising portion extending upward from the end opposite from the first rising portion. It is preferable that the second rising portion has a second opening for causing the laser beam from the light-emitting source to enter into the mirror.

In the above-mentioned optical pickup unit, the yoke may further comprise an extending portion extending horizontally from the upper end of the first rising portion toward the upper surface of the damper base and it is preferable that the yoke is fixed to the damper base at the extending portion.

In the above-mentioned optical pickup unit, the yoke may comprise the yoke piece extended upward on the bottom portion between the first rising portion and the second rising portion, and it is preferable that permanent magnets are attached to the insides of the first rising portion and the second rising portion, respectively.

In the above-mentioned optical pickup unit, it is preferable that the optical pickup unit is a multiple-wavelength optical pickup unit which can record and reproduce to any of a plurality of type of optical discs having different light wavelength.

According to another aspect of the present invention, an optical disc drive comprising any one of the optical pickup units is provided.

In the Drawings;
Fig. 1 is a perspective view of an objective lens driving device in the related art;
Fig. 2 is a perspective view of a yoke used in the objective lens driving device shown in Fig. 1;
Fig. 3 is a cross-sectional side view of the objective lens driving device shown in Fig. 1 taken by a plane along a centerline in the tangential direction;
Fig. 4 is a perspective view of the objective lens driving device sectioned as in Fig. 3 and seen obliquely from above;
Fig. 5 is an appearance view of an optical base to which the objective lens driving device shown in Fig. 1 is assembled;
Fig. 6 is a perspective view of an objective lens driving device according to an embodiment of the present invention;
Fig. 7 is a perspective view of the objective lens driving device shown in Fig. 6, seen from a back surface side;
Fig. 8 is a perspective view of an optical pickup unit including the objective lens driving device shown in Fig. 6 seen from a top surface side thereof;
Fig. 9 is a perspective view of the optical pickup unit shown in Fig. 8 when seen from a back surface side;
Fig. 10 is a perspective view of a yoke used in the objective lens driving device shown in Fig. 6;
Fig. 11 is a perspective view of a damper base constituting the objective lens driving device shown in Fig. 6;
Fig. 12 is a cross-sectional side view of the objective lens driving device shown in Fig. 6 taken by a plane along a centerline in the tangential direction;
Fig. 13 is a perspective view of the objective lens driving device sectioned as in Fig. 12 when seen obliquely from above; and
Fig. 14 is an appearance view of the optical base to which the objective lens driving device shown in Fig. 6 is assembled.

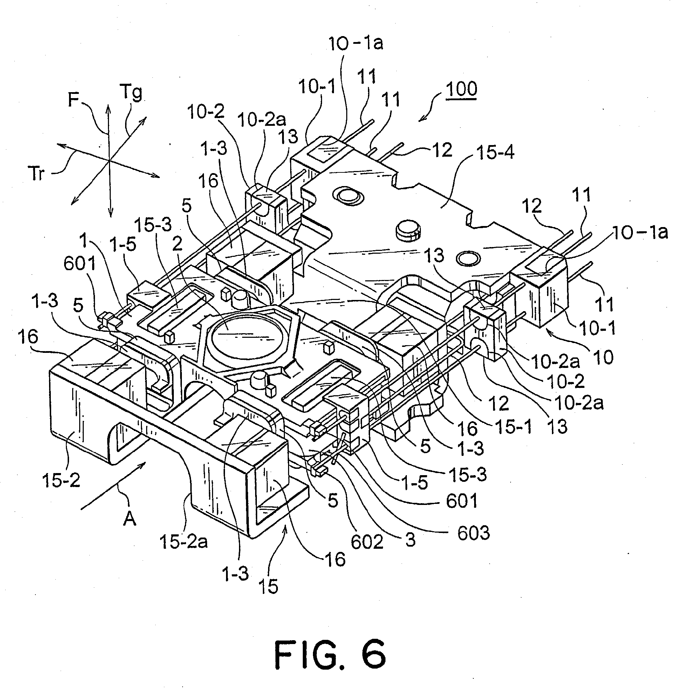

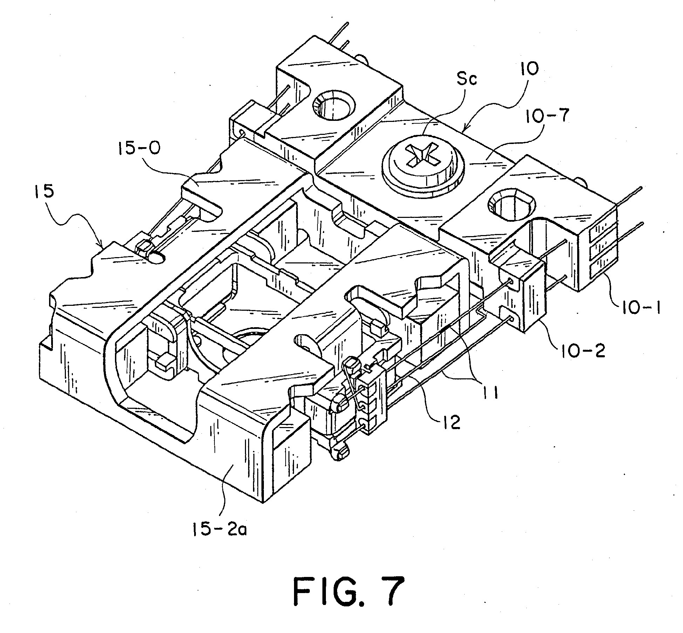

Fig. 6 is a perspective view of an objective lens driving device 100 according to an embodiment of this invention. The illustrated objective lens driving device 100 is shown in a state where a metallic top cover, such as a top cover 20A illustrated in Fig. 1 is removed from it. Fig. 7 is a perspective view of the objective lens driving device shown in Fig. 6, seen from a back surface side.

As shown in Fig. 6, the objective lens driving device 100 comprises an objective lens holder 1. The objective lens holder 1 has a lens fitting portion for fitting an objective lens 2 at a center thereof. The lens fitting portion has a through hole. The objective lens holder 1 comprises a pair of main bobbin portions for wining two tilting coils (which will later be described) and two focusing coils 3 at both sides of the lens fitting portion in a tracking direction Tr.

Each main bobbin portion has an opening for exposing a part (which will later be described) of a yoke. The objective lens holder 1 has four outer walls. The objective lens holder 1 comprises four sub bobbin portions 1-3 for winding four tracking coils 5 at two outer walls in parallel in the tracking direction Tr or a width direction in positions corresponding to the above-mentioned main bobbin portions, respectively.

In the example being illustrated, the objective lens holder 1 is elastically supported through four suspension wires 11 by a damper base 10. The damper base 10 is apart from the object lens holder 1 in a tangential direction Tg. Specifically, the damper base 10 has two supporting portions 10-1 at two side walls in parallel in the tangential direction Tg. Each of the two supporting portions 10-1 is for supporting ends of the corresponding two suspension wires 11. An end of each suspension wire 11 penetrates the corresponding supporting portion 10-1 and is adhesively fixed at a concave portion 10-1 a. The concave portions 10-1 a are formed in the supporting portion 10-1 at upper and lower surfaces thereof. At inner sides of the supporting portions 10-1, ends of two lead wires 12 are attached to the damper base 10. The damper base 10 has two damper portions 10-2 apart from the supporting portions 10-1 in the tangential direction Tg toward the objective lens holder 1. Each of the two damper portions 10-2 has two U-shaped ditches 10-2a at both sides in a focusing direction F. In the ditches 10-2a, damping material 13 such as silicone gel is filled.

On the other hand, at two side walls in parallel in the tangential direction Tg, the objective lens holder 1 has two supporting portions 1-5 each of which is for supporting other ends of the two suspension wires 11 and another end of the lead wire 12. The other ends of each suspension wire 11 and the lead wire 12 penetrate and are adhesively fixed to the corresponding supporting portion 1-5 in a penetrated state.

At any rate, in the example being illustrated, a suspension member consists of the four suspension wires 11 disposed on both sides of the damper base 10 and the objective lens holder 1. The suspension member elastically supports the objective lens holder 1 with respect to the damper base.

As well known in the art, the four suspension wires 11 and the two lead wires 12 are also used as wires for electrically connecting the above-mentioned various coils with an external circuit, namely, a driving circuit for driving the objective lens driving device 100. At a lower side of the objective lens holder 1, an assembled member consisting of a yoke 15 and four magnets 16 are disposed. The assembled member forms a magnetic circuit among the above-mentioned various coils. The magnetic circuit applies driving forces to the two tilting coils, the two focusing coils 3, and the four tracking coils 5 according to energizing to the two tilting coils, the two focusing coils 3, and the four tracking coils 5.

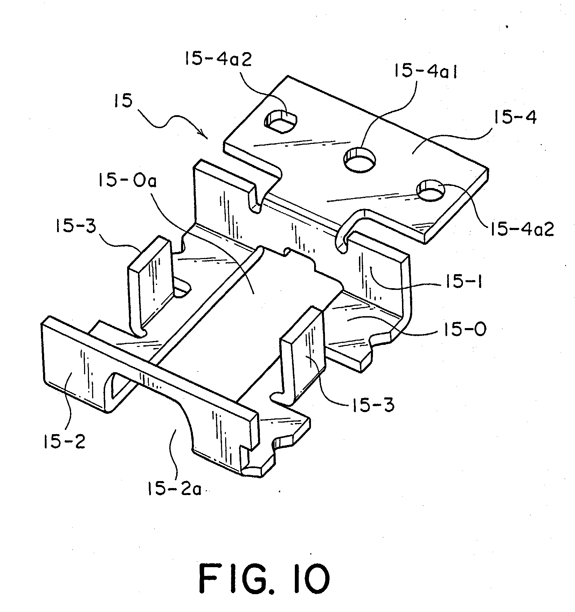

Referring to Fig. 10 together with Figs. 6 and 7, the yoke 15 comprises a first rising portion 15-1 and a second rising portion 15-2. The first rising portion 15-1 is opposed to and apart from two of the four tracking coils 5 that are wound around the two sub bobbin portions 1-3 formed in one side wall of the objective lens holder 1. The second rising portion 15-2 is opposed to and apart from remaining two of the four tracking coils 5 that are wound around the two sub bobbin portions 1-3 formed in another side wall of the objective lens holder 1. The yoke 14 further comprises two third rising portions (yoke pieces) 15-3 between the first rising portion 15-1 and the second rising portion 15-2. The two third riding portions 15-3 pass through the main bobbin portions of the objective lens holder 1. The second riding portion 15-2 has an opening 15-2a for ensuring an optical path of a laser beam for the objective lens 2 fitted in the objective lens holder 1 as shown in an arrow A (Fig. 6).

The yoke 15 also comprises an extending portion 15-4 horizontally extending in the tangential direction Tg from at a central portion of the first rising portion 15-1 to cover an upper surface of the damper base 10.

At any rate, the yoke 15 is formed of a metal plate member. In other words, the first to third rising portions 15-1 to 15-3 and the extending portion 15-4 are formed by forming slits on a rectangular bottom portion (main surface portion) 15-0 having an opening 15-0a and performing a bending process. In particular, the opening 15-0a is formed on the bottom portion 15-0 at part of the proximal portion of the first rising portion 15-1 and from the proximal portion of the first rising portion 15-1 toward the second rising portion 15-2. With respect to the second rising portion 15-2, by bending the second rising portion 15-2 at a midpoint of the opening 15-0a, part of the opening 15-0a defines an opening 15-2a (second opening), and the remaining portion defines a first opening.

The extended portion 15-4 includes a screw hole 15-4a1 for inserting a screw at a center thereof for integration with the damper base 10. Holes 15-4a2 for positioning with respect to the damper base 10 are formed on both sides of the screw hole 15-4a1.

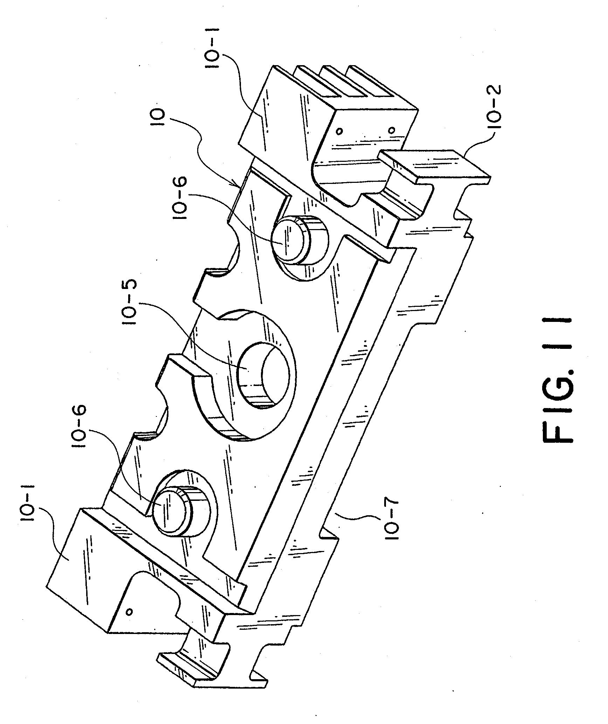

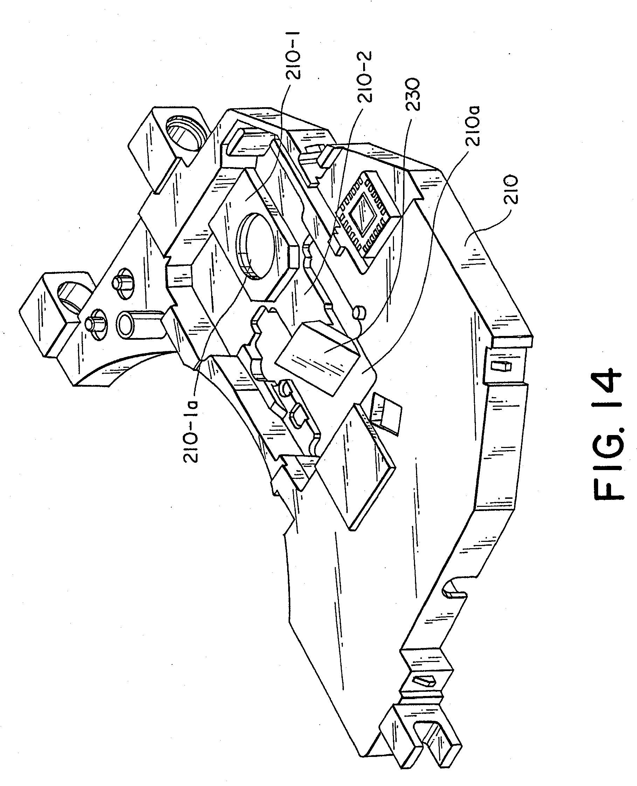

Referring now to Figs. 7, 10 and 11, an integrated structure of the yoke 14 and the damper base 10 will be described. The damper base 10 includes a through hole 10-5 for allowing passage of a screw Sc at the center thereof. The screw Sc is screwed from the lower surface side of the damper base 10 toward the screw hole 15-4a1 of the extended portion 15-4 of the yoke 15. The diameter of the through hole 10-5 is larger than the diameter of the screw shaft of the screw Sc. In order for positioning with respect to the extended portion 15-4, two projections 10-6 are formed onto the upper surface of the damper base 10 at both sides of the through hole 10-5. Namely, these two projections 10-6 intrude into two holes 15-4a2 of the extended portion 15-4. The length of one of the two holes 15-4a2 is increased in the tracking direction. It is for allowing the two projections 10-6 to intrude into the two holes 15-4a2 even through the distance between the two projections 10-6 may have slight dimensional difference. The damper base 10 includes a recess 10-7 at the center of the lower surface thereof, so that a slightly higher pedestal portion 210-1 (Fig. 14) of the optical base 210 can be received.

At any rate, the yoke 15 is fixed to the damper base 10 by allowing the two projections 10-6 inserted into the two holes 15-4a2 of the extending portion 15-4 and screwing the screw Sc toward the screw hole 15-4a1 of the extending portion 15-4 from the lower surface side of the damper base 10. The damper base 10 is formed so that the lower surface of the damper base 10 comes to a position higher than the lower surface of the yoke 15 in the state of being integrated to the yoke 15.

Two of four magnets 16 are attached to the inner surface of the first rising portion 15-1 and oppose to two tracking coils 5, while remaining two are attached to the inner surface of the second rising portion 15-2 and oppose to the two tracking coils 5. The first and second rising portions 15-1 and 15-2 serve as permanent magnet holding portions.

Turning back to Fig. 6, two end portions of the two focusing coils 3 are connected to two first connection terminals 601, two end portions of the four tracking coils 5 are connected to two second connection terminals 602, and two end portions of the two tilting coils 4 are connected to two third connection terminals 603. Connected to the end portions of the two focusing coils 3, the two first connection terminals 601 are electrically connected to tip portions of one pair of the four suspension wires 11. Connected to the end portions of the four tracking coils 4, the two second connection terminals 602 are electrically connected to tip portions of another pair of the four suspension wires 11. The four suspension wires 11 are fixed to the two supporting portions 1-5 so as to penetrate the two supporting portions 1-5. Connected to the end portions of the four tilting coils 4, the two third connection terminals 603 are electrically connected to tip portions of the two lead terminals 12.

As shown in Fig. 6, after the two lead wires 12 penetrate and are fixed to the two supporting portions 1-5, the tip portions of the two lead wires 12 are bent downwards to be electrically connected to the two third connection terminals 603 for the two tilting coils 4.

Fig. 6 is the perspective view of the objective lens driving device 100 showing a state where the yoke 15 and the four magnets 16 are assembled to the objective lens holder 1 in which the coils 3, 4, and 5 are wound and the suspension wires 11 are attached. Each of the four magnets 16 is a double pole magnetized magnet.

In the manner which is easily understood from Fig. 1, the two tilting coils 4, the two focusing coils 3, and the four tracking coils 5 are partially located in magnetic gaps of the magnetic circuit comprising a combination of the yoke 15 and the four magnets 16. Accordingly, the objective lens holder 1 moves or tilts in accordance with currents flowing through the coils 3, 4, and 5. That is, it is possible to carry out the tilting control, the focusing control, and the tracking control by controlling the currents flowing through the coils 3, 4, and 5. In other words, the objective lens driving device 100 of the symmetry type is capable of finely controlling a position and an inclination of the objective lens 2 by controlling the currents flowing through the respective coils 3, 4, and 5.

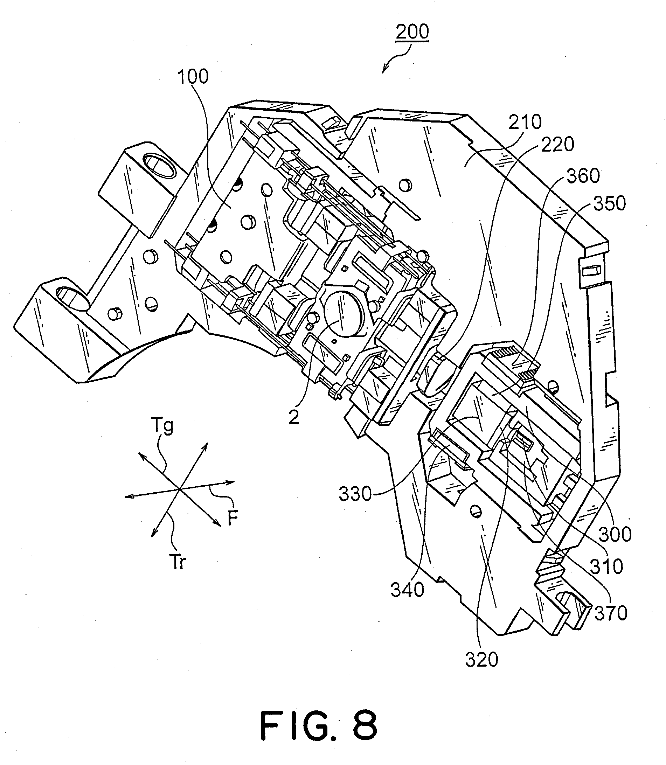

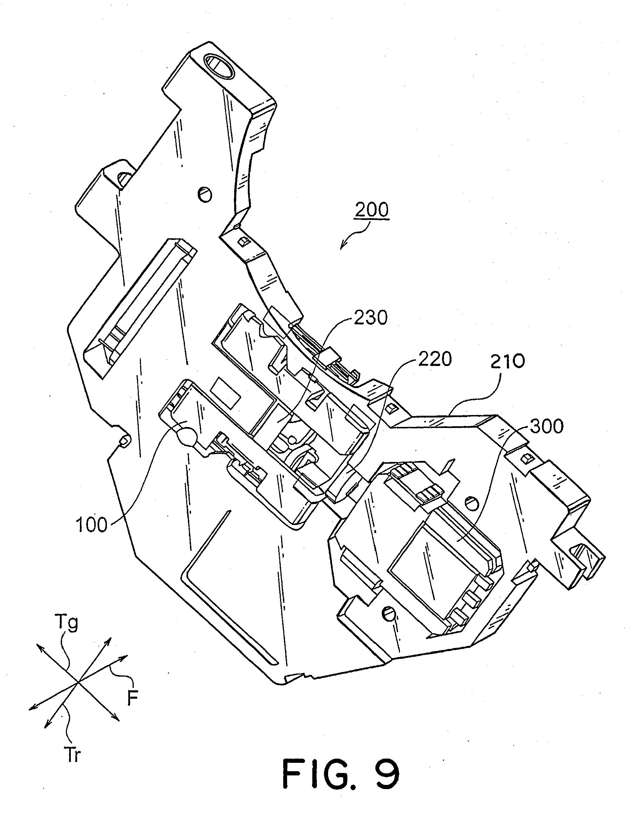

Figs. 8 and 9 are views showing an optical pickup unit 200 including the objective lens driving device 100 illustrated in Fig. 6. Fig. 8 is a perspective view of the optical pickup unit 200 seen from a top surface side. Fig. 9 is a perspective view of the optical pickup unit 200 seen from a bottom surface side. The illustrated optical pickup unit 200 is a two-wavelength handling type.

The optical pickup unit 200 comprises an optical base 210 on which the objective lens driving device 100 is mounted. The optical base 210 is movably mounted to guide bars (not shown) along a radial direction (the tracking direction Tr) of an optical disc loaded in an optical disc drive. In the optical base 210, a laser diode, a photodetector, and a predetermined optical system are mounted in the manner which will later be described. In the optical pickup unit 200, a laser beam from the laser diode is irradiated onto an optical disc through the objective lens 2 and its reflected beam is guided to the photodetector.

The illustrated optical pickup unit 200 comprises a light receiving/emitting packaged type module 300 mounted on the optical base 210. The light receiving/emitting packaged type module 300 comprises a laser emitting element 310, an optical axis correcting element 320, a polarization beam splitter 330, a front monitor 340, a sensor lens 350, and a photodetector 360. The laser emitting element 310 is mounted on a metallic frame 370. The laser emitting element 310 comprises a one-chip type laser diode comprising, as one part (one chip), a first laser diode and a second laser diode. The optical axis correcting element 320 is for coinciding an optical axis of a first laser beam emitted from the first laser diode with another optical axis of a second laser beam emitted from the second laser diode.

The first laser diode is a laser diode for emitting the first laser beam having, as a first wavelength, a wavelength of 650 nm for a DVD. The second laser diode is a laser diode for emitting the second laser beam having, as a second wavelength, a wavelength of 780 nm for a CD.

Between the light receiving/emitting packaged type module 300 and the objective lens driving device 100, a collimator lens 220 is mounted on the optical base 210. Under the objective lens 2, a total reflection mirror (a rising mirror) 230 (Fig. 9) is attached to the optical base 210.

Now, the description will proceed to operation of the two-wavelength handling optical pickup unit 200 illustrated in Figs. 8 and 9. First, the description will be made as regards operation in a case where the DVD is used as the optical disc. Subsequently, the description will later be made as regards operation in a case where the CD is used as the optical disc.

When the optical disc is the DVD, only the first laser diode is put into an active state while the second laser diode is put into an inactive state. Accordingly, only the first laser diode emits the first laser beam.

Emitted from the first laser diode for the DVD, the first laser beam passes through the optical axis correcting element 320 at which the optical axis of the first laser beam is corrected. The corrected first laser beam enters the polarization beam splitter 330. Almost of the corrected first laser beam transmits through the polarization beam splitter 330 while a part of the corrected first laser beam is reflected by the polarization beam splitter 330. Reflected by the polarization beam splitter 330, the laser beam is monitored by the front monitor 340. Transmitted through the polarization beam splitter 330, the laser beam is collimated by the collimator lens 220 into a collimated beam which enters in the objective lens 2 through the total reflection mirror 230. Transmitted through the objective lens 2, the laser beam is converged therein and is irradiated (concentrated) on a recording surface of the DVD as the optical disc.

In the manner which is well known in the art, the two-wavelength handling optical pickup unit is operable at a writing mode or a reproducing mode. When the two-wavelength handling optical pickup unit operates at the writing mode, operation thereof comes to end in the above-description. On the other hand, when the two-wavelength handling optical pickup unit operates at the reproducing mode, the following operation proceeds.

Reflected from the recording surface of the optical disc (DVD), a first return beam passes through the objective lens 2, is reflected by the total reflection mirror 230, and transmits through the collimator lens 220 to obtain a converged beam. The converged beam is reflected by the polarization beam splitter 330, transmits the sensor lens 350, and then is concentrated (received) in the photodetector 360.

Next, when the optical disc is the CD, only the second laser diode is an active state while the first laser diode is an inactive state. Accordingly, only the second laser diode emits the second laser beam.

Emitted from the second laser diode for the CD, the second laser beam passes through the optical axis correcting element 320 at which the optical axis of the second laser beam is corrected. Operation after this is similar to the above-mentioned case where the optical disc is the DVD. Specifically, the corrected second laser beam enters the polarization beam splitter 330. Almost of the corrected second laser beam transmits through the polarization beam splitter 330 while a part of the corrected second laser beam is reflected by the polarization beam splitter 330. Reflected by the polarization beam splitter 330, the laser beam is monitored by the front monitor 340. Transmitted through the polarization beam splitter 330, the laser beam is collimated by the collimator lens 220 into a collimated beam which enters the objective lens 2 through the total reflection mirror 230. Transmitted through the objective lens 2, the laser beam is converged therein and is irradiated (concentrated) on a recording surface of the CD as the optical disc.

Reflected from the recoding surface of the optical disc (CD), a second return beam passes through the objective lens 2, is reflected by the total reflection mirror 230, and transmits through the collimator lens 220 to obtain a converged beam. The converged beam is reflected by the polarization beam splitter 330, transmits the sensor lens 350, and then is concentrated (received) in the photodetector 360.

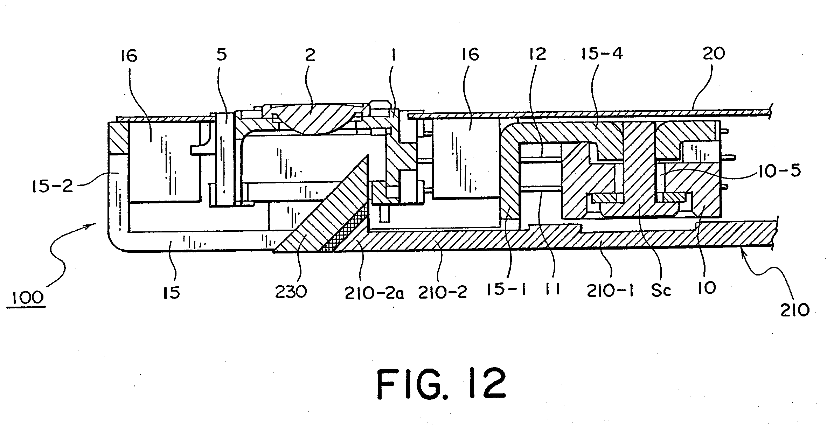

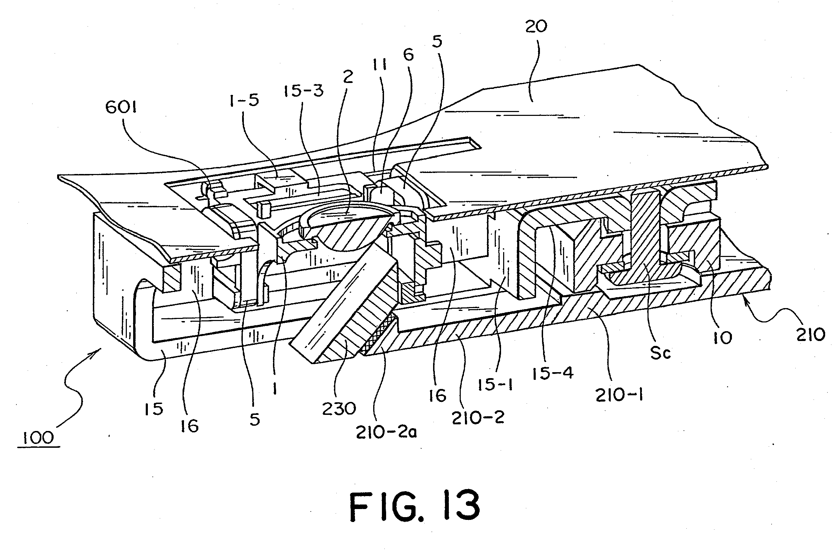

Figs. 12 and 13 are vertical cross-sectional view and perspective view partly in cross section of the objective lens driving device 100, respectively, showing the mounting structure of the total reflection mirror 230 according to the present invention clearly. Figs. 12 and 13 show a state in which the upper surface of the objective lens driving device 100 except for the portion near the objective lens is covered with a metallic top cover 20. Fig. 14 is a perspective view of the optical base 210 before the objective lens driving device 100 is assembled.

Referring to Fig. 10 to Fig. 14, the mounting structure of the total reflection mirror 230 according to the present invention will be described in detail.

The optical base 210 includes a receiving portion 210a for assembling the objective lens driving device 100. The major portion of the receiving portion 210a is a hollow space which penetrates from the front side to the back side. Namely, the pedestal portion 210-1 is formed in the region of the receiving portion 210a corresponding to the lower surface of the damper base 10, and the pedestal portion 210-1 includes a projection 210-2 for mounting the total reflection mirror 230 so as to project into the hollow space. In particular, the projection 210-2 extends to a range just under the objective lens 2, and a wedge-shaped portion 210-2a which can receive the total reflection mirror 230 with a wide area is formed at the distal end thereof. The total reflection mirror 230 is mounted by being bonded at the rear surface thereof to an inclined surface of the wedge-shaped portion 210-2a. The projection 210-2 is formed so as to project into the opening 15-0a of the yoke 15 when the objective lens driving device is assembled to the optical base 210. In particular, the lower surface of the projection 210-2 is subjected to be flush with the lower surface of the optical base 210, and also with the lower surface of the yoke 15 substantially. Accordingly, reduction of the thickness of the optical pickup is achieved.

The pedestal portion 210-1 is for providing the projection 210-2, and hence needs not to be in abutment with the lower surface of the damper base 10. This is because assembly of the objective lens driving device 100 to the optical base 210 is achieved by bonding the part of the yoke 15 to the edges on both sides of the receiving portion 210a of the optical base 210. The pedestal portion 210-1 also has a function to improve the mechanical strength of the optical base 210. This function is achieved by the fact that the area of the hollow space is smaller than the area of the hollow space in the optical base 210A in the related art shown in Fig. 5 by the intermediary of the pedestal portion 210-1 between the edges on both sides of the receiving portion 210a. The pedestal portion 210-1 includes a recess 210-1 a which is larger then the head of the screw Sc at the center thereof so as to allow projection of the head of the screw Sc toward the lower surface of the head.

Assembly work of the objective lens driving device 100 to the optical base 210 will be described. Fig. 14 shows a state before mounting the objective lens driving device 100 to the optical base 210. Namely, in this state, the total reflection mirror 230 is mounted to the wedge-shaped portion 210-2a of the projection 210-2 of the optical base 210 by adhesive agent. Although the mounting angle of the total reflection mirror 230 is substantially set to 45 degrees with respect to the main surface of the optical base 210, this angle is must not necessarily be highly accurate. This is because the objective lens driving device 100 is assembled to the optical base 210 with the posture with respect to the optical base 210 adjusted.

As regards assembly of the objective lens driving device 100, the optical base 210 is fixed by a jig, and the objective lens driving device 100 is retained by another jig. Then, the objective lens driving device 100 is assembled to the optical base 210 in a state in which a test beam is irradiated into the total reflection mirror 230, and the posture of the objective lens driving device 100 is adjusted (for example, skew adjustment) so that the test beam irradiated into the total reflection mirror 230 enters in parallel with the optical axis of the objective lens 2. When the posture is fixed, adhesive agent is applied between part of the yoke 15 and the edge of the receiving portion 210a while keeping the posture and settled. The lower surface of the yoke 15 may not be exactly flush with the lower surface of the optical base 210 in the course of the posture adjustment. However, the shift amount is small, and hence the lower surface of the yoke 15 and the lower surface of the optical base 210 must simply be substantially flush with each other. In other words, the reason why the lower surface of the yoke 15 is arranged to be substantially flush with the lower surface of the projection 210-2 is to prevent the height of the optical pickup unit from increasing, and the small amount of shifting with respect to the lower surface of the optical base 210 is insignificant.

If an integral-type emitting/receiving module 300 is mounted, the test beam may be a laser beam therefrom, and if it is before mounting, another beam source can be used.

As described thus far, the optical pickup unit according to the present embodiment is adapted in such a manner that the projection 210-2 for mounting the total reflection mirror 230 can be projected into the opening 15-0a of the bottom portion 15-0 of the yoke 15 from the lower side of the damper base 10 while avoiding overlapping with the yoke 15. In this arrangement, the total reflection mirror 230 can be mounted stably while securing a sufficient bonding area on the wedge-shaped portion 210-2a without increasing the height of the optical pickup unit. Consequently, the mounting reliability of the total reflection mirror can be improved.

In this embodiment, the projection 210-2 is formed the pedestal portion 210-1 of the receiving portion 210a of the optical base 210. Consequently, such effect that the pedestal portion 210-1 improves the mechanical strength of the optical base 210 is obtained.

The present invention has been described based on one embodiment, the present invention is not limited to the above-described embodiment. For example, the optical pickup unit according to the present invention is not limited to a multi-wavelength type for more than two wavelengths, but may be applied to an optical pickup unit for one-wavelength type as a mater of course. The optical pickup unit can be mounted to any one of various types of optical disc drives described above. Therefore, according to the present invention, the optical drive of various types as described above. Therefore according to the present invention, various types of optical disc drives having the above-described optical pickup unit are provided.

## Claims

1. An optical pickup unit (200) comprising an objective lens driving device (100) including an objective lens holder (1) for holding an objective lens (2), a damper base (10) for elastically supporting the objective lens holder with a plurality of suspension wires (11), and a yoke (15) including a plurality of permanent magnet holding portions (15-1,15-2) and a yoke piece (15-3) to be inserted into the objective lens holder in order to form a magnetic circuit with respect to a plurality of coils (3,4,5) mounted to the objective lens holder, the optical pickup unit further comprising an optical base (210) in which the objective lens driving device is assembled, and a mirror (230) for reflecting a laser beam from a light-emitting source (310) and cause the laser beam to enter into an optical disc through the objective lens; **characterized in that**:
the yoke comprises a bottom portion (15-0) and a first rising portion (15-1) extending upward from an end of the bottom portion near the damper base, and has a first opening (15-0a) extending from the proximal end of the first rising portion through the bottom portion to the end opposite from the first rising portion, and
the optical base comprises a projection (210-2) extending from the proximal side of the first rising portion within the first opening and a mirror mounting portion (210-2a) provided at the distal end of the projection.

2. The optical pickup unit as claimed in claim 1, wherein the optical base comprises a pedestal portion (210-1) in a region corresponding to the lower surface of the damper base, and the projection extends from the pedestal portion.

3. The optical pickup unit as claimed in claim 1 or 2, wherein the mirror mounting portion having an inclined surface, and the mirror is mounted at the back side bonded to the inclined surface.

4. The optical pickup unit as claimed in any one of claims 1-3, wherein the objective lens driving device is assembled to the optical base with the lower surface of the yoke and the lower surface of the projection being aligned in flush with each other.

5. The optical pickup unit as claimed in any one of claims 1-4, wherein the yoke further comprises a second rising portion (15-2) extending upward from the end opposite from the first rising portion, the second rising portion has a second opening (15-2a) for causing the laser beam from the light-emitting source to enter into the mirror.

6. The optical pickup unit as claimed in any one of claims 1-5, wherein the yoke further comprises an extending portion (15-4) extending horizontally from the upper end of the first rising portion toward the upper surface of the damper base and the yoke is fixed to the damper base at the extending portion.

7. The optical pickup unit as claimed in claim 5 or 6, wherein the yoke comprises the yoke piece (15-3) extended upward on the bottom portion between the first rising portion and the second rising portion, and permanent magnets (16) are attached to the insides of the first rising portion and the second rising portion, respectively.

8. The optical pickup unit as claimed in any one of claims 1-7, wherein the optical pickup unit is a multiple-wavelength optical pickup unit which can record and reproduce to any of a plurality of type of optical discs having different light wavelength.

9. An optical disc drive comprising the optical pickup unit according to any one of claims 1 to 8.
